# EUROPEAN PATENT SPECIFICATION

(11) **EP 0 260 458 B1**
(45) Date of publication and mention of the grant of the patent: **22.12.1993**
(21) Application number: 87111957.4
(22) Date of filing: 18.08.1987
(51) Int. Cl.: G06F 9/46, G06F 13/38

(54) **Networking processors**
Netzwerkprozessoren
Processeurs pour réseau

(30) Priority: 17.09.1986 US 908534
(43) Date of publication of application: 23.03.1988
(73) Proprietor: International Business Machines Corporation, Armonk, N.Y. 10504 (US)
(72) Inventor: Chang, Chij-Mehn, Austin Texas 78759 (US); Freund, Thomas James, Winchester Hampshire SO12 3DQ (GB); Loucks, Larry Keith, Austin Texas 78750 (US); Wierwille, Robert Lee, Leander Texas 78641 (US)
(74) Representative: Burt, Roger James, Dr.

(56) References cited:
- WO-A-86/02749
- DATA COMMUNICATIONS, vol. 15, no. 8, July 1986, pages 169-174, New York, US; E.E. STEVENS et al.: "APPC: The future of microcomputer communications within IMB's SNA"

## Description

This invention relates to networking processors and to providing application programs access to a network architecture.

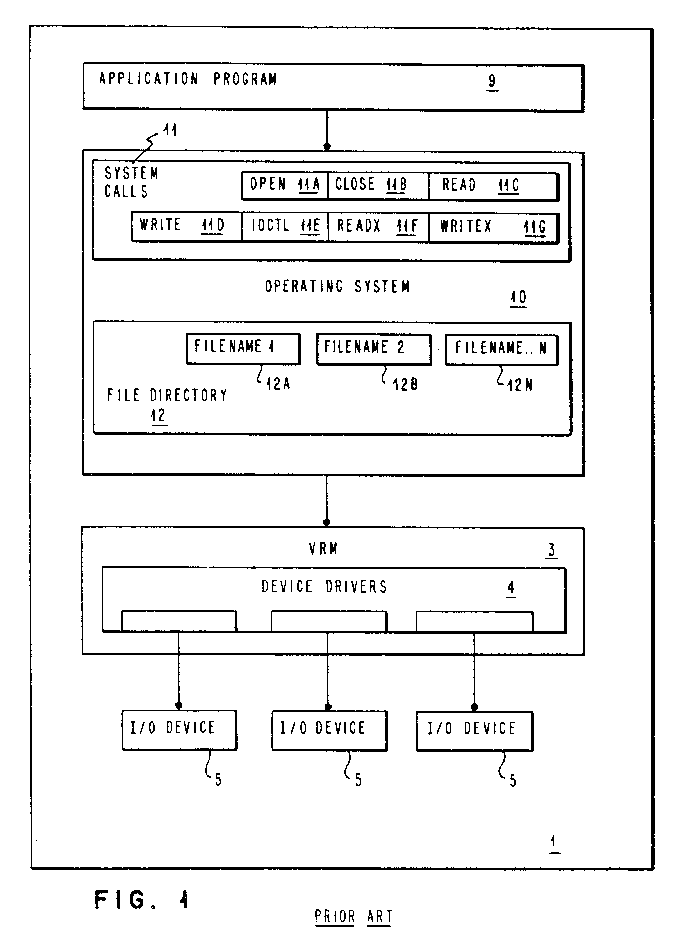

As shown in Fig. 1, a typical processing system 1 is made up of layers. One of the layers is an operating system 10 that controls the execution of machine level program statements for controlling data buffering, routing, sequencing, input/output control, data management, compilation, and other services. Below the operating system layer 10 is a logical layer called a virtual resource manager (VRM) 3. All of the commands of the operating system 10 that go to the devices 5 (keyboards, printers, displays, etc.) of the processing system must go through the virtual resource manager 3 which includes the device drivers 4 of the corresponding devices 5.

A typical operating system 10 is AIX (Trademark of International Business Machines Corporation) which is based upon UNIX (Trademark of AT&T) System V. With this type of operating system 10, the physical devices 5 are controlled by device drivers 4. The services provided by the device drivers 4 are defined by the functions of the system calls 11 of the operating system 10 which are implemented in the drivers 4. A typical system call interface 11 of an operating system 10 includes
the commands OPEN 11A, CLOSE 11B, READ 11C, WRITE 11D, IOCTL 11E, READX 11F, and WRITEX 11G.

The system call interface 11 for this operating system 10 is file system oriented. Accordingly, the operating system treats all devices 5 as a file names within a file directory 12 of the operating system 10. One device will be file name 12A, another file name 12B, and so on. The operating system 10 opens a file for reading and writing, performs the read or write operations, and subsequently closes the file. For example, if one of devices 5 were a printer, the command OPEN 11A would treat the printer as a file and open it. The command WRITE 11B would send data to a printer as if it were writing to a file. In this way, device control is provided for a device.

The top most layer of the processing system 1 is an application program such as the application program 9. The application program 9 uses the processing system 1 to perform specific task oriented functions.

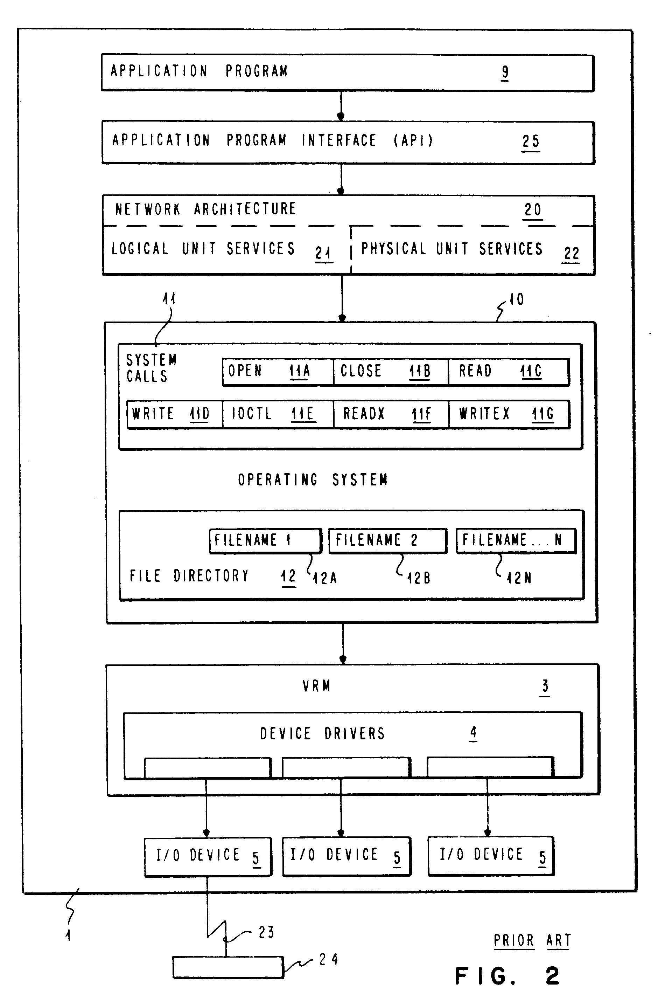

As shown in Fig. 2, in order for a processing system 1 to communicate to other remote processing systems or other devices 24, the processing system must have an architecture 20 that defines the information flow through the network system. A typical network architecture 20 comprises a total description of the logical structure, formats, protocols, and operational sequences for transmitting information through the communication system. The structure of a network architecture 20 typically allows the source and target (i.e., the end users) of the information flow to be independent of, and unaffected by, the system services and facilities used for information exchange.

A typical network architecture 20 is called Systems Network Architecture (SNA). Systems Network Architecture (SNA) is a specification that formally defines the functional responsibilities for components of a data communications system, and specifies how those components must interact. In an SNA structure, all nodes, or linked elements follow these definitions.

Systems Network Architecture has two components that control the operation of the local node in the network. One is the physical unit 22, the other is the logical unit 21. Each one of these components has a special assigned function in the network. Also, each of these components can be separately addressed by other members of the network.

The physical unit 22 controls the physical resources of the node. Physical resources include the data links 23 that connect the node to the network, storage, and input/output devices 5. All nodes in the network must have a physical unit.

The logical unit 21 provides the interface to the network for the end user. It provides protocols that allow end users to communicate with each other and with other components in the network. A logical unit (LU) is classified according to the protocol that it implements. For example, the SNA protocol consists of unique environments for LU types 1,2,3, and 6.2.

Logical Units 1, 2, and 3 (LU1, LU2, LU3) communicate with a host computer in a primary-to-secondary relationship. The host computer, as the primary node, controls the data interchange between the two nodes. Specifically, the LU 1 protocol manages the input/output devices associated with the logical unit such as printers, card readers, storage devices, and operator consoles. The LU 2 protocol describes the protocol of an IBM 3270 data terminal connected to the host. It provides keyboard input and display output. The LU 3 protocol describes the protocol of a printer connected to the host. It provides printed output. The LU 6.2 protocol provides advanced program to program communications (APPC) for communications between two programs on a peer-to-peer basis instead of in a primary-to-secondary relationship.

A link session describes the physical hardware and supporting programs that allow a system to attach to a particular communications link 23. The link session includes the remote node, but only describes the physical environment of the nodes. For example, a link session may be an adapter for the hardware 5, cabling, and Synchronous Data Link Control (SDLC) software that enables a system to attach to a SDLC network.

An SNA session defines the network path that links two logical units in different nodes together to enable them to establish communications. An SNA session includes network addressing, the name of the remote program, and other descriptive information, as well as the attachment. An application program interface (API) 25 is the mechanism by which a communication application program 9 acquires use of the network protocol of architecture 20. In order to write extremely efficient programs that provide high level services to a general class of user, the programmer requires direct interaction with, and intimate knowledge of the network protocols of the architecture. The user would also have to alter the communication application program to interface with the various network protocols for each unique environment (e.g., the SNA protocol consists of unique environments for LU types 1, 2, 3, and 6.2).

Deficient in the above is the ability of an application running on an operating system to communicate through network protocols of a selected network architecture.

Accordingly, the present invention provides a processor in or for inclusion in a network and having an operating system of the kind in which system devices are addressed and accessed as if they were system files, characterised in that the available network architectures are also loaded as system device files and so accessed, the operating system being arranged to recognise an extended device file call, identifying the network architecture required and the target of the invoked network communication, to generate an interface to the network which supports a sequential I/O model of the operating system, whereby the user is isolated from the details of the networks available and any changes made thereto.

The present invention equally provides a method for applications running on an operating system having a file structure to communicate through network protocols, characterised by the steps of:
placing network characteristics data into the file structure of an operating system; and
making an interface to the network supporting a sequential I/O model of the operating system.

This ability is provided by locating the network architecture within the file structure of the operating system, and extending the pathname in the file directory of the operating system. With this arrangement, the application accesses the network architecture through a device driver, and accesses a connection through the extended pathname. The device driver and connection are called through the operating system's calls as if it were a file contained within the file directory of the operating system. One advantage is that access to the network architecture supports a sequential I/O model of the operating system. Another advantage is that redirection is facilitated. The user communicates with the network architecture on an abstract level and can write a communications application program without having a detailed knowledge of the specifics of a network architecture.

There is no need to alter communication application programs for interfacing to a different network environment so that the need of an application programmer to have a detailed understanding of the requirements to configure communication resources within a network is eliminated.
A network architecture is placed within the operating system of a processing system through a path name of the operating system's file directory. The path name defines the network type, such as SNA, as a file name having a directory entry within the operating system's file system. The path name is extended to designate the communication path between a source and a target destination. The extended path name designates the connections and attachments of the network type. Connections are names by which the network can find specific information about the session being activated. The connection name is analogous to a file name in the network directory.

A connection defines the network path that links two logical units in different nodes together to enable them to establish communications. A connection includes network addressing, the name of the remote program, and other descriptive information, as well as the attachment.

An attachment describes the physical hardware and supporting programs that allow a system to attach to a particular communications link. The attachment includes the remote node, but only describes the physical environment of the nodes. For example, an attachment may be the hardware adapter, cabling, and Synchronous Data Link Control (SDLC) software that enables a system to attach to a SDLC network.

The network resource available to an application program within a network architecture is specifically defined. The resource is defined as a connection. A connection is a path between the application programs which provides a specified level or class of service to a user. In an operating system that is file oriented, the services defined bind the resource directly to an application. The resource is reused when the application reaches a termination point. The network architecture defines the resource as reusable and application programs share the resource by requesting its use as needed.

A specific connection is determined by a name included on the operating OPEN system call. By use of this name, the network architecture terminology used to determine the connection is isolated from the user of the operating system calls. The user deals with the name and defers to a system administrator to specify the exact meaning of the name.

The use of the name to specify a connection allows the user of the operating system call function to deal on an abstract level with the network architecture configuration options. Without this capability the user would be required to alter the communication application programs for changes in location of a resource within the network. Also, the user would need to have a detailed understanding of the requirements to configure communication resources within a network.

An interface to a network architecture is provided by giving the operating system a device driver interface to the network architecture. The network architecture device driver maps the system calls of an operating system to a network environment type service such as SNA LU1, LU2, LU3, or LU 6.2. A file oriented operating system treats all devices as a file. As such, the interface to the network architecture supports a sequential I/O model of the operating system through the operating system's common application program interface, referred to as the "common API". This common API comprises the commands OPEN, CLOSE, READ, WRITE, and IOCTL. The operating system allows program control through this common API, treating the operations as an access to a file.

The system of this invention uses a system call interface (OPEN/CLOSE/READ/WRITE/READX/WRITEX) of the operating system to run an existing application in a network environment. The underlying communication environment support is made transparent to the existing application program. In this way, the application programs are not restricted to the existing communication network environment for which they were originally written. Additionally, the existing programs can be run in a different network environment without being rewritten. Placing the network architecture into a general operating system sequential I/O model offers the capability for commands that were designed to support the sequential I/O model, but were not designed to run on the network, to interact with the network without any change. This supports the concept of redirection.

Thus, the network architecture is put into the operating system such that it supports the sequential I/O model of the operating system, and supports redirection. In this way, existing facilities such as the CAT command can have its output redirected to a SNA network connection.

The present invention will be described further by way of example with reference to an embodiment thereof as illustrated, together with samples of the environmental prior art, in the accompanying drawings in which:-
Fig. 1 shows the layers of a processing system known in the art;
Fig. 2 shows a network architecture in a processing system as known in the art;
Fig. 3 shows a processing system with the network architecture in the file system of the operating system;
Fig. 4 shows the processing system of this invention;
Fig. 5 is a flow chart showing the process of opening SNA;
Fig. 6 is a logical view of a network structure; and
Fig. 7 shows redirecting output to another connection.

In the description which follows, reference will be made to a specific network architecture known as Systems Network Architecture (SNA). However, the following invention encompasses other network architectures, also.

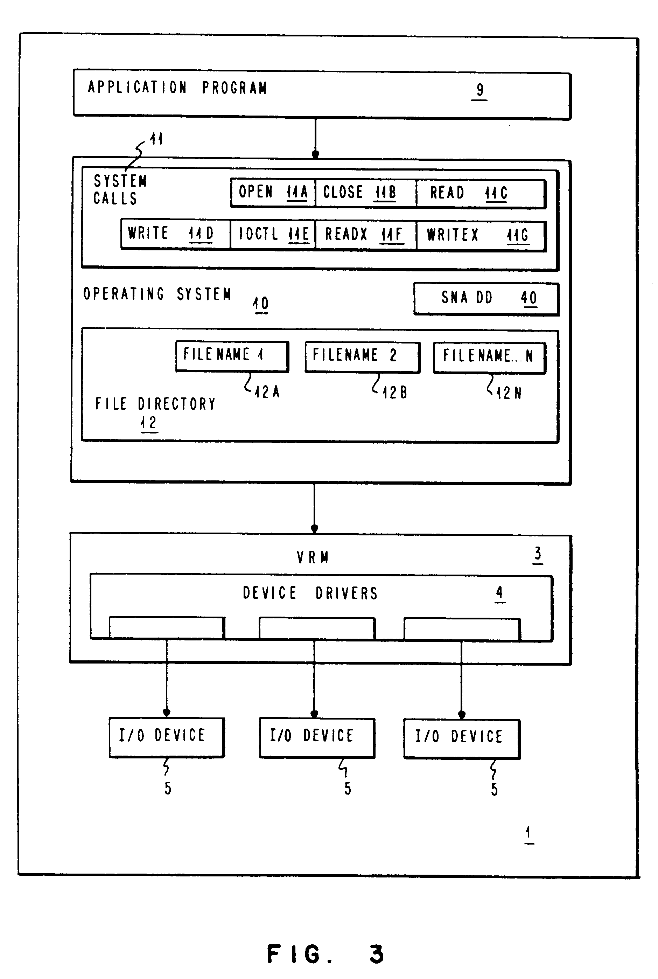

Fig. 3 shows the structure of the processing system 1 of this invention. The system and method of this invention places the name of the network architecture as a filename (one of 12A, 12B,..12N) within the file directory 12 of the operating system 10. In a preferred embodiment, the network type name SNA. Additionally, the network architecture is accessed through the SNA device driver 40. The device driver 40 is a multiplex device driver.

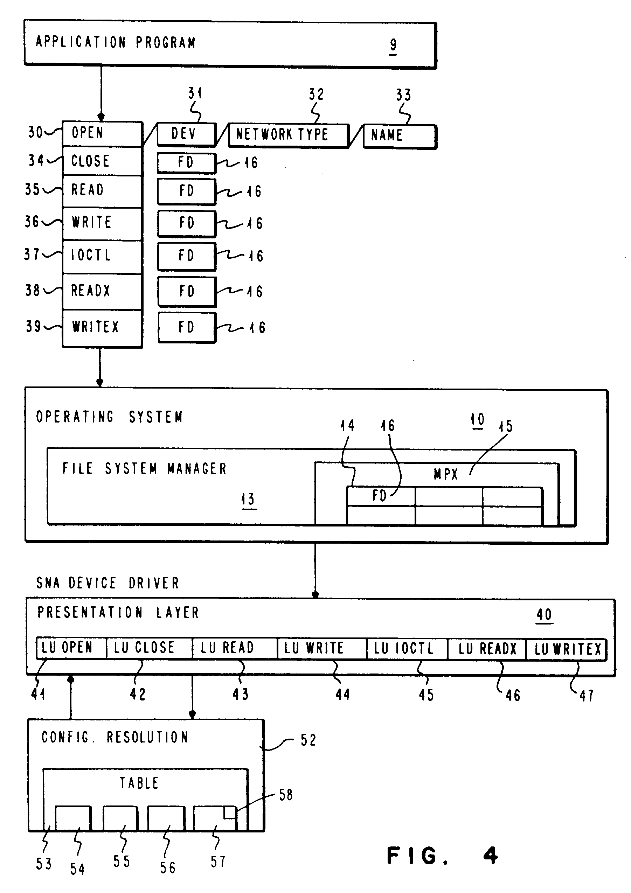

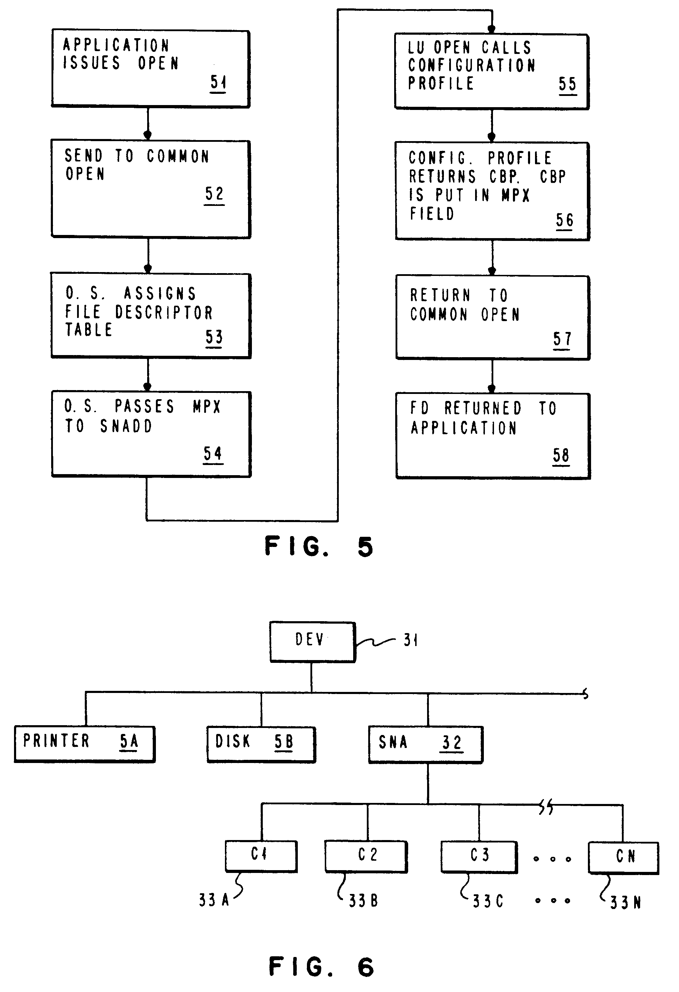

Fig. 4 shows an application 9 incorporating the system calls OPEN 30, CLOSE 34, READ 35, WRITE 36, IOCTL 37, READX 38, and WRITEX 39 to communicate through a network protocol. To open a device, it is known to issue the command OPEN /DEV/device name. Since the device to be opened is a network type device driver 40 such as SNA, the command becomes OPEN /DEV/network type 30-32. In addition, the path name "/dev/network type" 31,32 is extended to allow a name at the end of the path name. The extended path name becomes /dev/network type/name 31,32,33. This treats the network 32 such as SNA like a directory of the connection name 33. Fig. 6 illustrates this logical view of a connection name 33 representing a file in a hierarchical directory of SNA 32 and device types 31. Since the device driver 40 is a multiplex device driver, the SNA device driver 40 can interpret directly the name 33 in the extended path name.

Refer next to Fig. 5. The name 33 is identified with a connection profile name 54 in a table 53 of a configuration resolution program 52. The connection profile name 54 is used to describe a particular network environment. The connection profile 54 identifies the exact characteristics within a network protocol. The configuration program 52 resolves the configuration data of a particular network environment. The Configuration data includes specifying the connections 55 and attachments 56 needed to establish a network environment.

The connections are the two end points such as the source and target destinations between which there is communication. Opening a connection picks the source and target logical units. Opening a connection also picks the attachment over which the communication will physically travel. For example, this may be an Ethernet or a Synchronous Data Link Control (SDLC) line. This defines how a user gets attached and gets access to the network. The connections are a member of the network type directory in the operating system's file directory.

With the configuration resolution program 52, the network environment configuration can be administered independently of the application program 9. As such, changes in the configuration and connection profiles are isolated from the application 9. The name 33 may remain unchanged although its associated connection profile 54 may change in the configuration resolution 52.

With reference to Fig. 5 and Fig. 4, opening SNA is described. Application 9 issues an OPEN /DEV/SNA/name 30-33 command, step 51. This command is sent to the operating system's common OPEN 11A (Fig. 3), step 52. The operating system 10 assigns one of its file descriptor tables 14 in the file system manager 13, step 53, and passes a mpx field 15 for a multiplex device to the LU OPEN command 41 in the SNA device driver 40, step 54. In this way access to a specific connection is possible by the application 9.

The LU OPEN command 41 calls the configuration resolution program 52, step 55. The configuration resolution program 52 builds a connection control block 57. The connection control block 57 contains the configuration information 54 of the network environment. The LU OPEN command 41 receives from configuration program 52 a pointer 58 to the connection control block 57, which it puts in the mpx field 15. The LU OPEN command 41 returns to common OPEN 11A (Fig. 3) in the operating system 10 step 57, which returns a file descriptor 16 which represents a connection to the application 9, step 58. The application 9 identifies SNA and the protocol environment with the file descriptor 16.

On any of the following commands 34-39 issued by the application 9, the SNA device driver 40 receives the mpx field 15 through the file descriptor 16. The mpx field 15 contains an address which points to the control block 58. This allows the file descriptor 16 returned by the OPEN to be bound to the connection name specified. In this way, the commands 34-39 communicate through the network protocol defined by the control block 57.

With the SNA data path as defined above, the commands 30-37 perform the following function. The command OPEN 30 establishes a connection. The command CLOSE 34 terminates the connection. The command READ 35 receives data on a conversation. The command WRITE 36 sends data on a conversation. A further description of these commands along with the commands 37-39, IOCTL, READX, WRITEX, respectively is provided in a commonly assigned co-pending application Serial No. US 908533 (AT9-86-061), "An Application Program Interface To Networking Functions" filed September 17, 1986, (now US 4768150) and the IBM RT PC AIX OS SNA Guide and Reference (order number SC 23-0814-00) which are both hereby incorporated by reference.

By placing the network architecture within the file structure of the operating system, and giving access to the network architecture through a device driver, the application is able to communicate through the network protocol as if the application were accessing files in a sequential I/O model.

There are many advantages to having the SNA data path as described above. Once the data is pipelined, there is a direct path from the operating system through the virtual resource manager to the physical attachment. Performance is one advantage since there is less processing, less overhead, and no interprocess communication using message queues.

Another advantage is that the application has control over the communication path of the data. With the SNA data path of this invention, the CAT command can have its output redirected to the SNA data path. This gives the additional advantage of redirection. Anything can be redirected to the SNA network that was directed to any of the other devices.

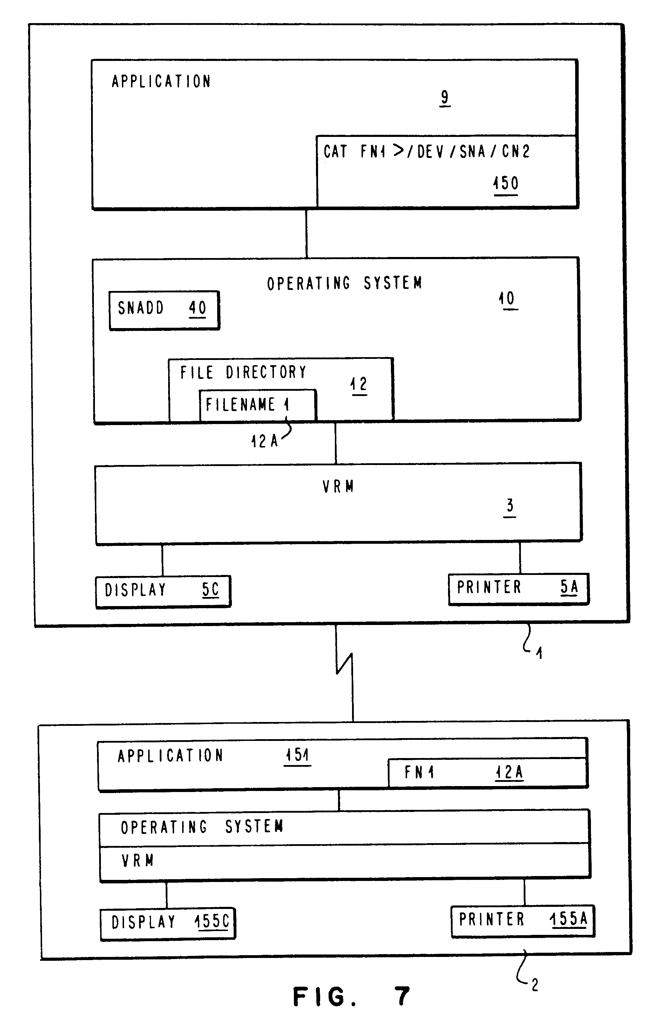

For example, Fig. 7 shows an application 9 issuing a CAT command 150. The CAT command 150 reads each file in sequence and writes it to standard output. "CAT filenamelJ/dev/SNA/connector name" redirects the standard output to the SNA network through the SNA device driver by "/dev/SNA". Without redirection the output would go to standard out which may be a display device 5C. With redirection the output can go to another application program 151 at another node 2 specified by the connection name which catches the data from the filename 12A specified. The program can then output the data to a display 155C or other device at that node 2 as directed by the application.

## Claims

1. A processor in or for inclusion in a network and having an operating system (10) of the kind in which system devices (4) are addressed and accessed as if they were system files, characterised in that the available network architectures are also loaded as system device files (40) and so accesssed, the operating system being arranged to recognise an extended device file call, identifying the network architecture required and the target of the invoked network communication, to generate an interface to the network which supports a sequential I/O model of the operating system, whereby the user is isolated from the details of the networks available and any changes made thereto.

2. A processor as claimed in claim 1, wherein the extended device file call is effectively a path name extension and comprises /dev/network type/name (31,32,33), the name identifying a connection.

3. A processor as claimed in claim 2, wherein the network type is SNA.

4. A processor as claimed in any preceding claim, wherein the interface comprises system calls of the operation system, for example, a READ command to the network protocol, a WRITE command to the network protocol, a READX command to the network protocol, a WRITEX command to the network protocol, and an IOCTL command to the network protocol.

5. A method for applications running on an operating system (10) having a file structure to communicate through network protocols, characterised by the steps of:
placing network characteristics data into the file structure of an operating system; and
making an interface to the network supporting a sequential I/O model of the operating system.

6. The method of claim 5 further comprising the step of accessing the network protocol through a device driver.

7. The method of claim 6, wherein the accessing step further comprises the step of issuing system calls of the operating system to the network protocol.

8. The method of any of claims 5 to 7, wherein the network is SNA and the interface comprises system calls of the operating system, for example, a READ command to the network protocol, a WRITE command to the network protocol, a READX command to the network protocol, a WRITEX command to the network protocol and an IOCTL command to the network protocol.

9. The method of any of claims 5 to 8, wherein the support of an I/O model is achieved by
extending a path name in the file structure of the operating system; and
identifying the network type environment in said extended path name.

10. The method of claim 9, wherein the extended path named is "/dev/network type/name", the last component of the extended path name identifying a connection and identifying the network type environment in said extended path name, the output of the application program being redirected to the identified network environment.

## Patentansprüche

1. Ein Prozessor in einem oder für die Verwendung in einem Netzwerk und mit einem Betriebssystem 10, in dem die Adressierung und der Zugriff auf die Systemgeräte (4) so verläuft, als ob es sich um Systemdateien handelte, dadurch charakterisiert, daß die verfügbaren Netzwerkarchitekturen ebenfalls als Systemgerätdateien (40) geladen werden und auf die ebenso zugegriffen wird, wobei das Betriebssystem so angeordnet ist, daß es einen erweiterten Gerätedateiaufruf erkennt und die benötigte Netzwerkarchitektur und das Ziel der ablaufenden Netzwerkkommunikation identifiziert, um eine Schnittstelle zum Netzwerk zu erzeugen, die ein sequenzielles Ein-/Ausgabemodell des Betriebssystems unterstützt, wobei der Benutzer von den Einzelheiten der verfügbaren Netzwerke sowie von Änderungen, die darauf durchgeführt werden, isoliert ist.

2. Ein Prozessor gemäß Anspruch 1, wobei der erweiterte Gerätedateiaufruf eine Pfadnamenerweiterung ist und /dev/Netzwerktyp/Name (31,32,33) umfaßt, wobei der Name eine Verbindung identifiziert.

3. Ein Prozessor gemäß Anspruch 2, wobei der Netzwerktyp SNA ist.

4. Ein Prozessor gemäß allen vorhergehenden Ansprüchen, in dem die Schnittstelle Systemaufrufe des Betriebssystems umfaßt, beispielsweise ein READ-Befehl zum Netzwerkprotokoll, ein WRITE-Befehl zum Netzwerkprotokoll, ein READX-Befehl zum Netzwerkprotokoll, ein WRITEX-Befehl zum Netzwerkprotokoll und ein IOCTL-Befehl zum Netzwerkprotokoll.

5. Ein Verfahren für Anwendungen, die auf einem Betriebssystem (10) laufen und die eine Dateistruktur zur Kommunikation über Netzwerkprotokolle aufweisen, durch folgende Schritte gekennzeichnet:
Setzen von Netzwerkcharakteristika in die Dateistruktur eines Betriebssystems; und
Herstellung einer Schnittstelle zum Netzwerk, das das sequenzielle Ein-/Ausgabemodell des Betriebssystems unterstützt.

6. Das Verfahren gemäß Anspruch 5, des weiteren bestehend aus einem Schritt für den Zugriff auf das Netzwerkprotokoll über einen Gerätetreiber.

7. Das Verfahren gemäß Anspruch 6, in dem der Schritt des Zugriffs des weiteren einen Schritt zur Abgabe von Systemaufrufen des Betriebssystems an das Netzwerkprotokoll enthält.

8. Das Verfahren gemäß jedem der Ansprüche 5-7, in dem das Netzwerk SNA ist und in dem die Schnittstelle Systemaufrufe umfaßt, beispielsweise einen READ-Befehl zum Netzwerkprotokoll, einen WRITE-Befehl zum Netzwerkprotokoll, einen READX-Befehl zum Netzwerkprotokoll, einen WRITEX-Befehl zum Netzwerkprotokoll und einen IOCTL-Befehl zum Netzwerkprotokoll.

9. Das Verfahren jedes der Ansprüche 5 bis 8, in dem die Unterstützung eines Ein-/Ausgabemodells erzielt wird durch
Erweiterung eines Pfadnamens in der Dateistruktur des Betriebssystems; und
Identifikation der Netzwerktyp-Umgebung im genannten erweiterten Pfadnamen.

10. Das Verfahren gemäß Anspruch 9, in dem der erweiterte Pfadname "/dev/Netzwerktyp/Name" ist, wobei die letzte Komponente des erweiterten Pfadnamens eine Verbindung identifiziert und die Netzwerktypumgebung im genannten erweiterten Pfadnamen identifiziert, wobei die Ausgabe des Anwendungsprogramms zur identifizierten Netzwerkumgebung umgelenkt wird.

## Revendications

1. Processeur dans, ou à inclure dans un réseau, ayant un système d'exploitation (10) du type dans lequel l'adressage des, et l'accès aux périphériques (4) du système s'effectuent comme s'ils étaient des fichiers du système; caractérisé en ce que les structures de réseau disponibles sont également chargées sous forme de fichiers de périphériques du système (40), avec accès idoine, le système d'exploitation étant configuré pour pouvoir reconnaître un appel de fichier de périphérique étendu, en identifiant la structure de réseau requise et la cible de la communication de réseau appelée, afin de générer une interface avec le réseau qui supporte un modèle d'entrée-sortie du système d'exploitation, ce qui permet d'isoler l'utilisateur des détails sur les réseaux disponibles et de toute modification qui y serait apportée.

2. Processeur selon la revendication 1, dans lequel l'appel de fichier de périphérique étendu est une extension de nom de chemin qui comprend /pér/type de réseau/nom (31, 32, 33), le nom identifiant une connexion.

3. Processeur selon la revendication 2, dans lequel le réseau est de type "SNA" ("structure de réseau de système").

4. Processeur selon l'une des revendications précédentes, dans lequel l'interface comprend des appels système du système d'exploitation comme, par exemple, une commande LIRE pour le protocole du réseau de transmission de données, une commande ECRIRE sur le protocole du réseau de transmission de données, une commande LIREX pour le protocole du réseau de transmission de données, une commande ECRIREX sur le protocole du réseau de transmission de données, et une commande CTLES pour le protocole du réseau de transmission de données.

5. Procédé pour des applications exécutées sur un système d'exploitation (10) ayant une structure de fichiers pour communiquer via des protocoles de réseau de transmission de données, caractérisé en ce qu'il comprend les étapes suivantes consistant à :
placer les données caractéristiques d'un réseau dans la structure de fichiers d'un système d'exploitation; et
créer une interface avec le réseau supportant un modèle d'entrée-sortie séquentielle du système d'exploitation.

6. Procédé selon la revendication 5 comprenant, de plus, l'étape consistant à accéder au protocole du réseau de transmission de données via un pilote de périphérique.

7. Procédé selon la revendication 6, dans lequel l'étape d'accès comprend, de plus, l'étape consistant à lancer des appels système du système d'exploitation vers le protocole du réseau de transmission de données.

8. Procédé selon l'une quelconque des revendication 5 à 7, dans lequel le réseau est une SNA et l'interface comprend des appels système du système d'exploitation comme, par exemple, une commande LIRE pour le protocole du réseau de transmission de données, une commande ECRIRE sur le protocole du réseau de transmission de données, une commande LIREX pour le protocole du réseau de transmission de données, une commande ECRIREX sur le protocole du réseau de transmission de données, et une commande CTLES pour le protocole du réseau de transmission de données.

9. Procédé selon l'une quelconque des revendications 5 à 8, dans lequel le support d'un modèle d'entrée-sortie est réalisé en
étendant un nom de chemin dans la structure de fichiers du système d'exploitation; et en
identifiant l'environnement du type de réseau dans ledit nom de chemin étendu.

10. Procédé selon la revendication 9, dans lequel le nom de chemin étendu est "/pér/type de réseau/nom", le dernier composant du nom de chemin étendu identifiant une connexion et l'environnement du type de réseau dans ledit non de chemin étendu, la sortie du programme d'application étant réacheminée sur l'environnement de réseau identifié.
